# EUROPEAN PATENT APPLICATION

(11) **EP 2 086 206 A1**
(43) Date of publication of application: **05.08.2009**
(21) Application number: 08300065.3
(22) Date of filing: 31.01.2008
(51) Int. Cl.: H04L 29/08, H04L 12/56

(54) **System for operating a peer-to-peer network taking into account access network subscriber information**

(71) Applicant: Alcatel Lucent, 75008 Paris (FR)
(72) Inventor: Schwan, Nico, 70190, STUTTGART (DE); Strauss, Thomas, 73734, ESSLINGEN (DE); Tomsu, Marco, 71254, DITZINGEN (DE)
(74) Representative: Thibaud, Jean-Baptiste

(57) **Abstract**

A system for operating a peer-to-peer network overlaid over a network infrastructure, said network infrastructure comprising an access network (1) operated by an access service provider and adapted to provide network access services to network devices (21, 22, 23) subscribed to the network access service, said system comprising:
a supernode (20) configured in accordance with a peer-to-peer communications protocol, said supernode being adapted to maintain a list of active peer nodes in the peer-to-peer network and to retrieve the peer nodes of the list holding a given resource in response to a request for said resource received from a requesting peer node,
a peer-to-peer management apparatus (30) having access to a data storage comprising subscription information of subscribers to the network access service and adapted to cooperate with the supernode to select a subset of the peer nodes holding the given resource as a function of subscription information.

## Description

### Field of the invention

The invention relates to the technical field of data networks, especially peer-to-peer (P2P) communication networks.

### Background of the invention

File sharing and video streaming P2P overlay networks cause a significant amount of the traffic of today's Internet. The logical overlay topology of the P2P network is usually built disregarding the underlying physical network infrastructure. The distinct P2P network algorithms use application specific content information or proprietary overlay identifiers to create the overlay topology. This incurs significant costs for Internet Service Providers (IPS) as the overlay topology routes traffic across network boundaries, possibly even multiple times.

Today's most popular P2P network algorithms, BitTorrent, eDonkey or Gnutella, rely on hybrid architecture. While the peers exchange content directly, they rely on a supernode that integrates and keeps track of joining or rejoining peers into the overlay network. This supernode has knowledge about the currently active peers of the network and provides requesting peers a subset of this list. It can be distributed or centralized (BitTorrent).

A user that wants to download a file from a BitTorrent P2P network first has to search for metadata, which can usually be found on Web Servers on the Internet. The metadata is stored in .torrent files and contains checksums for the content and the network address of the tracker. The tracker keeps track of the active peers that are currently involved in the content distribution. A joining peer initially asks the tracker for a peer list of active peers holding a given resource. The returned peer set list is generated randomly and can be renewed every time the peer set list of a requesting peer contains less then a threshold, e.g. usually 20 peers. Finally the requesting peer contacts the peers of the peer set and starts to exchange content with these peers. The requesting peer periodically contacts the tracker to keep the internal peer list up to date. The tracker can also be realized by the peers in a distributed fashion. Since the overlay graph generated by the P2P algorithm disregards the actual IP infrastructure, connections are randomly generated across network borders causing significant costs for ISPs.

It has been proposed to introduce a so-called Oracle server in a BitTorrent network. The Oracle server is aware of metrics concerning the network of an ISP, e.g. Autonomous Systems (AS), number of AS hops according to the BGP path, distance to the edge of the AS according to the IGP metric, geographical information, performance information such as expected delay, bandwidth and link congestion. The oracle server is thus able to measure the distance between two peer nodes of the P2P network. A peer joining the overlay forwards the peer set received from the tracker to the Oracle server. The Oracle server calculates the distance between each peer of the list and the joining peer and returns the ranked list back to the joining peer. The joining peer then starts to contact the peers with respect to the ranking of the Oracle server. Thus the probability that two peer nodes establish a connection at near distance increases. However, the P2P communication protocol of the peers has to be adapted to enable interactions between the peer nodes and the Oracle server.

In another proposed system, a supernode, e.g. BitTorrent tracker, is configured as an active listener to one or more network routing protocols and uses IGP and BGP information from a router to respond to a requesting peer. In one approach, the supernode refers peer nodes only to resources that are located in the same AS as the supernode. This system relies on interception techniques such as deep packet inspection.

### Summary of the invention

It is an object of the invention to modify the operation of a peer-to-peer network to enable access service providers to influence the overlay structure of a P2P network in their own interest and in the interest of their customers. It is another object of the invention to enable access service providers to offer differentiated P2P service experiences to customers. It is another object of the invention to provide an improved peer-to-peer system compliant to existing peer-to-peer communication protocols.

According to an embodiment of the invention, these objects are achieved by a system for operating a peer-to-peer network overlaid over a network infrastructure, said network infrastructure comprising an access network operated by an access service provider and adapted to provide network access services to network devices subscribed to the network access service, said system comprising:
a supernode configured in accordance with a peer-to-peer communications protocol, said supernode being adapted to maintain a list of active peer nodes in the peer-to-peer network and to retrieve the peer nodes of the list holding a given resource in response to a request for said resource received from a requesting peer node in the peer-to-peer network,
a peer-to-peer management apparatus having access to a data storage comprising subscription information of subscribers to the network access service and adapted to cooperate with the supernode to select a subset of the peer nodes holding the given resource as a function of subscription information of a network device hosting a peer node,
wherein said supernode is adapted to send a list of the selected peer nodes to the requesting peer node.

The peer-to-peer management apparatus can use subscription information relating to some of the peer nodes or all peer nodes in the P2P network. In embodiments, the subscription information relied upon to select peer nodes relates to the requesting peer and/or to the other peers. In a preferred embodiment, the subset selection for a requesting peer node hosted by a network device subscribed to the network access service is performed as a function of subscription information of the corresponding network device.

In embodiments, the subscription information can include one or several pieces of information in the group consisting of tariff options, nominal bandwidth parameters in the last hop, such as e.g. xDSL line parameters, geographical location, customer service class and other subscriber specifics. In a preferred embodiment, the subscription information includes an enhanced peer-to-peer service option, wherein the subset selection is performed with a first method if the option is activated and with a second method if the option is not activated for the requesting peer node. This embodiment makes it possible to offer differentiated peer-to-peer experiences to customers as a function of their subscription to the enhanced peer-to-peer service option. Diverse differentiation strategies can be implemented for that purpose.

In a preferred embodiment, the peer-to-peer network includes a cache peer node hosted in the access network and adapted to cache resources received from peer nodes hosted outside the access network. In an embodiment, the second method comprises excluding the cache peer node from the selected subset. In another embodiment, the first method comprises including the cache peer node in the selected subset.

In embodiments, the peer-to-peer management apparatus is adapted to cooperate with the supernode to generate connection ratings for the connections between the requesting peer node and peer nodes holding the given resource and to select the subset of the peer nodes holding the given resource as a function of the corresponding ratings.

The connection ratings can be calculated as a function of diverse criteria, e.g. subscriber specifics such as subscription tariff, traffic volume state, connectivity, bandwidth; access network properties such as current load distribution, network topology, aggregated traffic profiles; and core network properties such as e.g. information obtained from a network management system, dedicated paths and inter-operator peering costs.

In embodiments, the connection rating for a peer node holding the given resource hosted by a network device subscribed to the network access service is generated as a function of subscription information of the corresponding network device. For example, the connection rating of the peer node can depend upon a nominal bandwidth, especially a nominal upload bandwidth, to which the network device is entitled.

In an embodiment, the subscription information for a network device hosting a requesting peer node includes an enhanced peer-to-peer service option, wherein the connection ratings are generated with a first rating method if the option is activated and with a second rating method if the option is not activated. This embodiment makes it possible to offer differentiated peer-to-peer experiences to customers as a function of their subscription to the enhanced peer-to-peer service option. Diverse differentiation strategies can be implemented for that purpose.

In an embodiment, the second method consists in generating empty or null connection ratings. In other words, this embodiment does not provide ratings for the connections if the option is not activated. If the option is not activated, the supernode selects the peers in the conventional manner in accordance with the peer-to-peer protocol, e.g. randomly.

In an embodiment the first method comprises generating the connection ratings as a function of the subscription information, especially a nominal upload bandwidth, of the network devices hosting the peer nodes holding the given resource and the second method comprises generating the connection ratings without referring to said subscription information, especially regardless of the nominal upload bandwidth.

Preferably, the list of the selected peer nodes is ordered as a function of the corresponding connection ratings. In an embodiment, the list of the selected peer nodes includes the corresponding connection ratings.

In a preferred embodiment, the supernode is adapted to provide an extended list of peer nodes holding the given resource to the peer-to-peer management apparatus, and the peer-to-peer management apparatus is adapted to generate the selected subset by filtering the extended list and to return the selected subset to the supernode.

In embodiments, the network infrastructure comprises multiple access networks operated by multiple access service providers and adapted to provide respective network access services to respective subscribers. The system may comprise multiple peer-to-peer management apparatuses having access to respective data storages comprising subscription information of subscribers to the respective network access services and each adapted to cooperate with the supernode to generate connection ratings for the connections between the requesting peer node and peer nodes hosted by network devices subscribed to the respective network access service as a function of subscription information of the corresponding network devices.

In a preferred embodiment, the peer-to-peer communications protocol is BitTorrent. In another embodiment, the peer-to-peer communications protocol is any one selected from the group consisting of Kazaa, Gnutella, Fast Track, eDonkey, Chord, and Tapestry. In other embodiments, any other peer-to-peer protocol may be used.

### Brief description of the drawings

These and other aspects of the invention will be apparent from and elucidated with reference to the embodiments described hereinafter, by way of example, with reference to the drawings.
Figure 1 is a schematic view of a network infrastructure comprising a system in accordance with a first embodiment of the invention.
Figure 2 shows the operation of the system of figure 1.
Figure3 shows a system in accordance with a second embodiment of the invention.
Figure 4 is a schematic view of a network infrastructure comprising a system in accordance with a third embodiment of the invention.

### Detailed description of the preferred embodiments

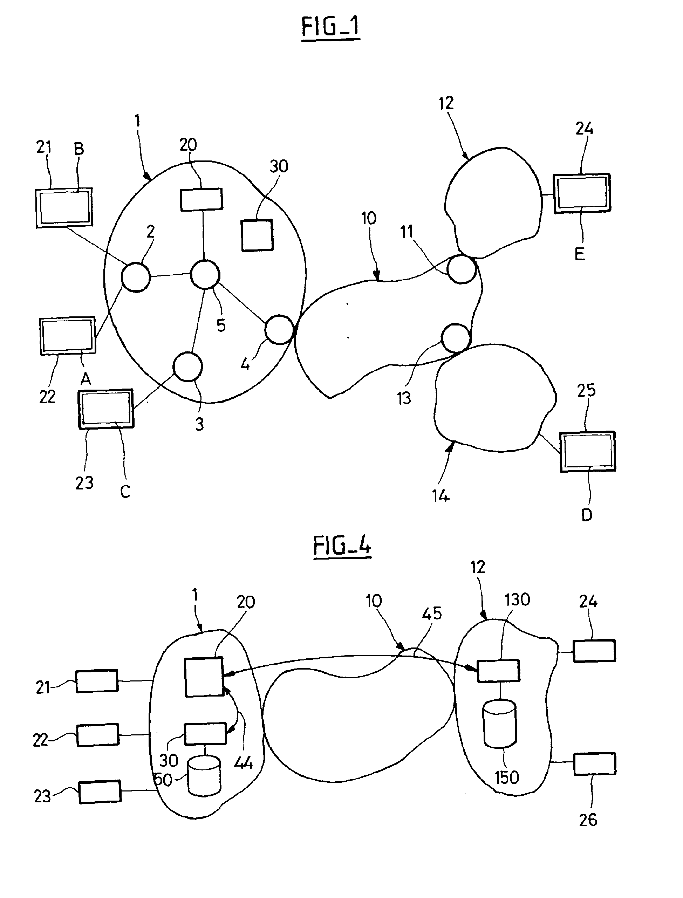

Figure 1 shows a network infrastructure that may be used to implement an embodiment. An access network 1 comprises edge routers 2, 3, 4 and core router 5. The edge routers and core routers may comprise any network element suitable for maintaining routing control plane information and forwarding packets based on the control plane information. Links among routers may use Ethernet, Fast Ethernet, Gigabit Ethernet, optical links, etc. The access technology can be any of existing and future access technologies, i.e. optical, wireless, wire line, xDSL, coaxial cable, etc. Edge router 4 is coupled to a wide-area network 10, e.g. the Internet. Wide-area network 10 may be connected to one or more access networks operated by different Internet Service Providers. In Figure 1, wide-area network 10 comprises an edge router 11 connected to an access network 12 and an edge router 13 connected to another access network 14. All access networks may comprise peer nodes or supernodes that conform to a peer-to-peer communication protocol. Here, "coupled" means connected directly or indirectly through one or more intermediate nodes.

Figure 1 also shows a plurality of network devices 21 to 25 that host respective peer nodes A to E. Network devices 21 and 22 are coupled to edge router 2. Network device 23 is coupled to edge router 3. Network device 24 is coupled to access network 12. Network device 25 is coupled to access network 14. The topology and number of nodes shown are purely illustrative. Network devices 21 to 25 may comprise any combination of data processing hardware and software that can host a peer-to-peer client application. Examples of devices suitable for use as network device include cellular radiotelephones, personal computers, personal digital assistants, set-top boxes, etc.

Peer nodes A to E can establish peer-to-peer communications using any of a plurality of peer-to-peer communication protocols, such as BitTorrent, Gnutella, etc., and exchange data. Each of the peer nodes A to E may hold resources such as applications, services or files that another node may wish to use or retrieve. A peer-to-peer supernode 20 is coupled to router 5. The supernode 20 is a node in the network that provides peer-to-peer applications with information about service, such as availability and location of non-real-time content or real-time streaming content, e.g., music, video, etc. Supernode 20 also may provide peer-to-peer applications with information about the availability or location of real-time interaction points, such as persons available for voice, video, or game interaction. Supernode 20 also may provide peer-to-peer applications with information about available resources such as CPUs, storage, etc. The term supernode is used broadly herein to encompass network nodes that may implement the approaches herein, as well as either (1) the functions and features of distributed nodes that are termed "supernodes" under the Kazaa or Skype protocols or termed an "ultrapeer" in a Gnutella network, and (2) centralized nodes that are termed "tracker" nodes under the BitTorrent protocol.

Collectively, peer nodes A to E form a peer-to-peer network that is conceptually overlaid on the network infrastructure. Access network 1 may comprise an autonomous system (AS) for purposes of Border Gateway Protocol (BGP) and other inter-domain routing protocols. For example, access networks 1, 12 and 14 may be owned and operated by respective Internet Service Providers. Wide-area network 10 may include any number of other autonomous systems associated with other ISPs that compete with the ISP that owns network 1. ISPs often must pay fees to one another for carrying traffic to a competitor ISP. Thus, the ISP that owns network 1, referred to as ISP 1 below, may wish to promote communication of certain kinds of peer-to-peer requests from network device 22 to peer nodes that are hosted by other subscribers to network 1, i.e. peer nodes B and C. The ISP 1 may also wish to define and enforce its own rules for promoting or restricting peer-to-peer requests in order to reduce the peering costs of the ISP or to meet other objectives.

For that purpose, a peer-to-peer manager 30 is provided in access network 1 to influence or modify the operation of supernode 20. Peer-to-peer manager 30 can be arranged in various manners in the network 1 so as to be able to communicate with supernode 20, i.e. peer-to-peer manager 30 is connected directly or indirectly to supernode 20.

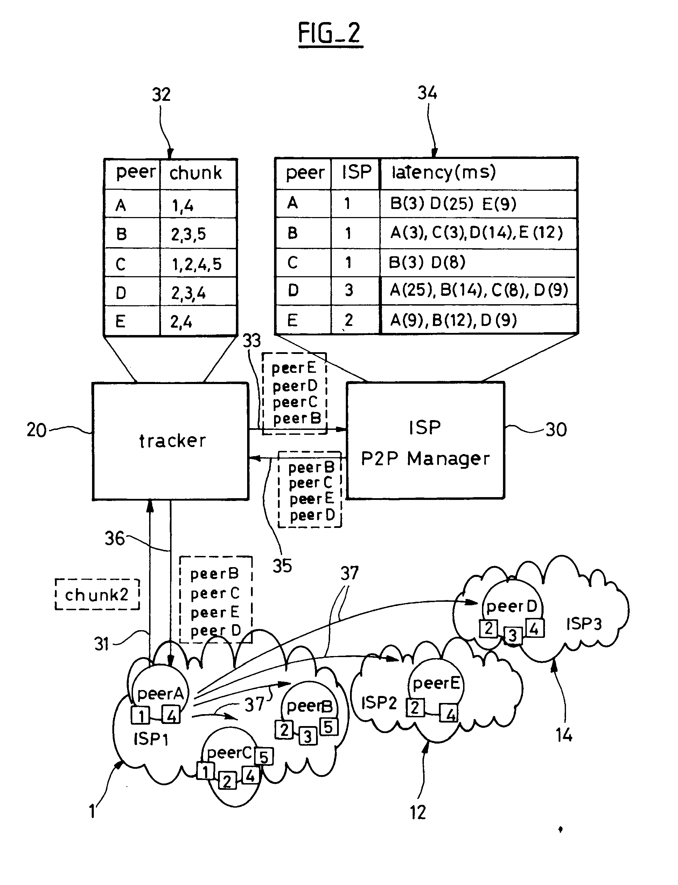

Figure 2 shows a first embodiment, which uses BitTorrent as a peer-to-peer communication protocol. In this embodiment, the supernode 20 is configured as a BitTorrent "Tracker" node with additional software instructions that implement the methods described below.

The operations of tracker node 20 and peer-to-peer manager 30 will be described through an example. Let us assume that peer node A wants to download a file called "chunck 2" from the BitTorrent P2P network. First, peer node A has obtained the network address of the tracker node 20. Then peer node A sends a request to the tracker for a peer list of active peers holding the resource "chunck 2", as shown by arrow 31. The tracker node 20 maintains a list of the active peers in the peer-to-peer network and the respective resources that they hold. This information is stored in any suitable format, e.g. as a table 32, in a data repository of the tracker node 20.

Upon receiving the request 31, the tracker node 20 generates an initial list of peer nodes that hold the requested resource. This initial list can be generated in accordance with the normal operation of a tracker, i.e. randomly, or in any other manner. In figure 2, the initial list reads E, D, C, and B. Then the tracker node 20 sends this initial list to the peer-to-peer manager 30 of the access network 1, as shown by arrow 33, in order to request a rating of the connections between peer node A and the peer nodes of the list. The peer-to-peer manager 30 can use any information that is made available by ISP 1 about the physical topology to generate the connection ratings. The peer-to-peer manager 30 uses this topology information and specific rules to rank the peer nodes of the initial list as a function of the quality of the connection with the requesting peer node A. Then peer-to-peer manager 30 returns the ranked list to the tracker node 20, as shown by arrow 35. In figure 2, the ranked list reads B, C, E, and D. The P2P Manager 30 may also delete peer nodes from the initial list.

In the embodiment of figure 2, the peer-to-peer manager 30 comprises a table 34 stored in a data repository and containing, for each peer node, an identification of the access network to which the peer node is connected and a distance measurement with other peer nodes. The access network is identified by the name of the ISP, i.e. ISP1 for network 1, ISP2 for network 12 and ISP 3 for network 14. The distance measurement between two peer nodes is expressed as the latency in milliseconds. In this example, the peer-to-peer manager 30 uses two ranking criteria. This first one consists in ranking the peer nodes as a function of the access network to which they are connected. Peer nodes B and C that are connected to the same access network 1 as peer node A are placed at the top of the list. Peer nodes D and E that are connected to other access networks are placed at the bottom of the list. Hence the locality of the connection between peer nodes in terms of access network is used as a primary ranking criterion. As a secondary ranking criteria, the peer-to-peer manager 30 uses the distance measurement when it is available. The ranked list on figure 2 was generated in accordance with these criteria.

The tracker node 20 finally returns the ranked peer list to the requesting peer node A, as shown by arrow 36. Then peer node A can contact the peer nodes accordingly, as shown by arrows 37.

This first embodiment has the advantage that it can be implemented without any modification of the P2P communication protocol between the tracker and the peer nodes. Only the cooperation between the tracker node and the P2P manager requires some modification of the BitTorrent P2P system. Another advantage results from the possibility to generate a very exhaustive initial peer list, since it is possible to use a high capacity connection between tracker node 20 and P2P manager 30. In an embodiment, the initial peer list thereby contains the requesting peer and as many as possible, or in the ideal case all, peers that are registered at the tracker for the requested content. Thus the P2P Manager 30 has the possibility to create an ideal peer set, by contrast with the randomly generated peer sets of the State-of-the-Art approaches.

To avoid the misuse of the P2P Manager, the interface needs to be secured. Access may only be granted to authenticated or preconfigured tracker nodes. Since P2P traffic can be made more local, the peering costs for the ISP can be drastically reduced.

The tracker node 20 cooperates with the P2P Manager 30 to get ratings for connections between two or more peers. Of course, other ranking criteria can be used in alternative or in combination with the above. The rating of a connection can be a single value indicating the quality of the connection or it can comprise several metrics defined for special purposes by the ISP. In a modified embodiment, the peer-to-peer manager 30 filters the initial list in accordance with one or more filtering criteria. A filtering criterion can be locality, i.e. peer nodes that do not connect to access network 1 are suppressed from the list. This guarantees that the most beneficial results are achieved to reduce the peering costs for the ISP1.

In a modified embodiment, tracker node 20 and peer-to-peer manager 30 cooperate in another manner to generate the filtered or ranked list. Instead of sending the modified list to the tracker node 20, the peer-to-peer manager 30 communicates the relevant topology information for the tracker node 20 to directly generate the optimized list in accordance with predefined rules. Thus, the tracker node 20 invokes P2P Manager 30 before it generates the initial peer set. In an embodiment, the tracker node can cache the topology information from the P2P manager in order to have fast access to a nearly up-to-date list with all online peers and the connection ratings between them. To generate the peer set, the tracker node can thus calculate an optimal peer set out of the global knowledge about the connections. In particular, to create a localized peer set, the tracker node 20 contacts the ISP P2P Manager 30 to request information about peers that have short distance connections to the requesting peer. The ISP P2P Manager therefore uses any information about the network that is made available by the ISP.

In an embodiment, the tracker node 20 is responsible for one or more AS corresponding to access network 1. To detect the AS of the peer nodes, the tracker node 20 may check their IP address. If the requesting peer is not located in one of these ASs, the tracker node 20 can redirect the requesting peer to another tracker or the tracker node 20 can serve as a relay and internally forward the request to the responsible tracker and respectively the response. Finally the ISPs could internally set up an overlay or collaboration between the ISP P2P Manager nodes providing an overall interface for the respective AS.

In an embodiment, the tracker node 20 also has information about the content chunk distribution between the peer nodes, e.g. which chunks are located on which peer nodes. This information can be used to optimize a peer set regarding content, e.g. to exclude that a peer set does not contain several chunks. The final peer set is a trade off between best connections and uniformly distributed chunks. A tracker even may choose to include peers of a foreign domain if several chunks are locally rare or nonexistent.

By operating one or more P2P managers dedicated to the access network 1, the service provider ISP1 has the possibility to define its very own set of rules that optimize peer selection. These can be rules based on access or core network properties or rules based on subscriber information.

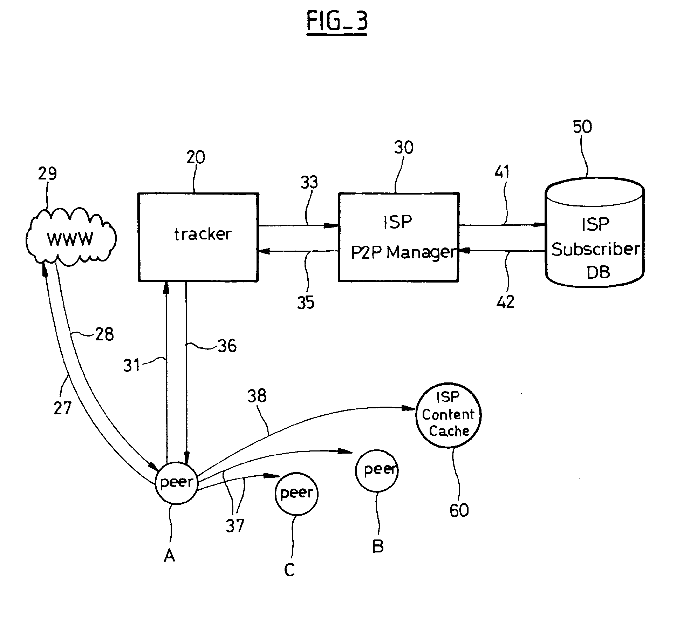

With reference to figure 3, embodiments in which the P2P manager uses subscriber specific information to generate the peer set will now be described. In all the figures, the same numerals refer to similar elements. Figure 3 illustrates the operation of these embodiments.

Again, we assume that peer node A wants to download a given resource from the BitTorrent P2P network. First, peer node A obtains the network address of the tracker node 20 through a web server 29. Preferably, the web server 29 responds to the request 27 as a function of the access network to which the peer node A is subscribed. Hence, the response 28 comprises the network address of a tracker node that is assigned to that access network, i.e. tracker node 20 dedicated to access network 1 in the example. Then peer node A sends a request to the tracker 20 for a peer list of active peers holding the resource, as shown by arrow 31. Upon receiving the request 31, the tracker node 20 generates an initial list of peer nodes that hold the requested resource.

Then the tracker node 20 forwards the initial peer list to the P2P Manager 30 in step 33. The initial peer list thereby contains the requesting peer and as many as possible, or in the ideal case all, peer nodes that are registered at the tracker for the requested content. Thus the P2P Manager 30 has the possibility to create an ideal peer set.

The P2P Manager 30 is operated by service provider ISP1 or in agreement with service provider ISP1 and has access to a data repository 50 comprising subscription information of subscribers to the access network 1, e.g. a subscriber database of ISP1. In step 41, the P2P Manager 30 contacts the ISP subscriber database to retrieve information about the requesting peer node A and/or about the peer nodes of the initial list. In step 42, the reply to the database query contains subscriber-based information, for example the bandwidth to which the peer nodes have subscribed. The P2P Manager 30 subsequently creates a rating for the connections between the peers of the peer list and the requesting peer as a function of that subscriber specific information, e.g. the upload bandwidth of the peer nodes B and C connected to access network 1. Then peer-to-peer manager 30 returns the list of the peer nodes having the best connection ratings to the tracker node 20, as shown by arrow 35. The result, which the tracker receives in the answer in step 35, is thus an optimized subset of the peer list that was submitted in step 33. Typically the result consists of about 80 peers, similar to the peer set that a standard tracker randomly generates for a requesting peer. The tracker node 20 finally returns the optimized peer list to the requesting peer node A, as shown by arrow 36. Then peer node A can contact the peer nodes accordingly, as shown by arrows 37.

By including subscriber specific information in the rules for rating the connections, the P2P Manager 30 is able to provide a more precise rating, especially for peer nodes subscribing to the same access network, for which the bandwidth in the last hop can be the most limiting parameter. Of course, the rating of the connections can be calculated as a function of subscriber specific information combined with other criteria, e.g. network topology, locality in terms of AS, etc.

In one embodiment, the service provider ISP1 offers a "P2P Acceleration Tariff", e.g. an option in the subscription that grants access to a specific service as described below. In step 41, the P2P Manager 30 contacts the ISP subscriber database to retrieve information about the requesting peer node A. The subscriber's account corresponding to peer node A can be found by the database query engine by knowing the IP address of the network device 22 hosting peer node A. In step 42, the reply to the database query contains information about the options included in the subscription. If the network device 22 hosting peer node A is subscribed to the 'P2P Acceleration Tariff' the P2P Manager 30 operates to provide a different service to the requesting peer node A from the case in which it has no corresponding subscription.

In an embodiment, the difference is made through the method for rating the connections between peer nodes. For the case the requesting peer is a subscriber to the 'P2P Acceleration Tariff', the P2P Manager 30 includes information about the connection bandwidth of the peer nodes into the rating, ranking high bandwidth nodes higher than low bandwidth nodes. Without the subscription, the requesting peer obtains a list of peers that is not optimized at all, or a list that is ranked only as a function of coarser criteria, e.g. AS.

In another embodiment, the difference is made through the filtering of the initial peer list. For example, the P2P Manager 30 reduces the peer list by deleting low ranked peers from the list only in case the option has been subscribed to. In another example, peer nodes that are connected through other access service providers are simply excluded if the option has not been subscribed to, regardless of the connection ratings.

In another embodiment, the access network 1 comprises one or more dedicated local content cache nodes 60, as shown in figure 3, to speed up the download of content, especially from external networks. This ISP content cache node is a node that behaves like a normal peer node and that accelerates downloading as it has high connectivity and capacity. In this embodiment, the P2P Manager 30 allows this peer node to be included in the optimized list only if the option has been subscribed to. Therefore the content cache node benefits only to subscribers to the 'P2P Acceleration Tariff' option. For example, the ISP P2P Manager may add an ISP content cache node to the peer list, ranked to the top position. Alternatively, the connection ranking for the content cache node may be calculated with the same rules and criteria as the other peer nodes. Therefore, the requesting peer node A is able to contact the content cache node 60 to start downloading the requested resource, as shown by arrow 38.

In the embodiment shown on Figure 4, the tracker node 20 in access network 1 is configured to poll several P2P manager nodes from different ISPs. Thus the possibility to obtain connection ratings for the peer nodes or a filtering of the best peer nodes can be extended to a plurality of access networks or BGP domains. In the example shown, P2P Managers 30 and 130 are run by different operators ISP1 and ISP2 in the corresponding access networks 1 and 12. By cooperating with P2P managers 30 and 130, as shown by arrows 44 and 45, the tracker node 20 may receive multiple peer sets, especially peer sets local to one operator. For example, the optimized peer set returned by P2P manager 30 includes the peer nodes hosted by network devices 22 and 23 subscribing to access network 1, whereas the optimized peer set returned by P2P manager 130 includes the peer nodes hosted by network devices 24 and 26 subscribing to access network 12. The tracker node 20, e.g. based on the connection ratings, can merge these peer sets. Finally the merged peer set is passed to the requesting peer node, which then starts downloading the content from the peer nodes.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software.

In the claims, any reference signs placed between parentheses shall not be construed as limiting the scope of the claims.

## Claims

1. A system for operating a peer-to-peer network overlaid over a network infrastructure, said network infrastructure comprising an access network (1) operated by an access service provider and adapted to provide network access services to network devices (21, 22, 23) subscribed to the network access service, said system comprising:
a supernode (20) configured in accordance with a peer-to-peer communications protocol, said supernode being adapted to maintain a list of active peer nodes in the peer-to-peer network (32) and to retrieve the peer nodes of the list holding a given resource in response to a request for said resource received from a requesting peer node in the peer-to-peer network,
a peer-to-peer management apparatus (30) having access to a data storage (50) comprising subscription information of subscribers to the network access service and
adapted to cooperate with the supernode to select a subset of the peer nodes holding the given resource as a function of subscription information of a network device hosting a peer node,
wherein said supernode is adapted to send a list of the selected peer nodes (36) to the requesting peer node.

2. A system in accordance with claim 1, wherein the subset selection for a requesting peer node hosted by a network device (22) subscribed to the network access service is performed as a function of subscription information of the corresponding network device.

3. A system in accordance with claim 2, wherein the subscription information includes an enhanced peer-to-peer service option, wherein the subset selection is performed with a first method if the option is activated and with a second method if the option is not activated for the requesting peer node.

4. A system in accordance with claim 3, wherein the peer-to-peer network includes a cache peer node (60) hosted in the access network and adapted to cache resources received from peer nodes hosted outside the access network, wherein the second method comprises excluding the cache peer node from the selected subset.

5. A system in accordance with claim 3 or 4, wherein the peer-to-peer network includes a cache peer node (60) hosted in the access network and adapted to cache resources received from peer nodes hosted outside the access network, wherein the first method comprises including the cache peer node in the selected subset.

6. A system in accordance with any one of claims 1 to 5, wherein the peer-to-peer management apparatus (30) is adapted to cooperate with the supernode (20) to generate connection ratings for the connections between the requesting peer node and peer nodes holding the given resource and to select the subset of the peer nodes holding the given resource as a function of the corresponding ratings.

7. A system in accordance with claim 6, wherein the connection rating for a peer node holding the given resource hosted by a network device subscribed to the network access service is generated as a function of subscription information of the corresponding network device.

8. A system in accordance with claim 7, wherein the connection rating of the peer node is dependent upon a nominal bandwidth to which the network device is entitled.

9. A system in accordance with any one of claims 6 to 8, wherein the subscription information for a network device hosting a requesting peer node includes an enhanced peer-to-peer service option, wherein the connection ratings are generated with a first rating method if the option is activated and with a second rating method if the option is not activated.

10. A system in accordance with claim 9, wherein the first method comprises generating the connection ratings as a function of the subscription information of the network devices hosting the peer nodes holding the given resource and the second method comprises generating the connection ratings without referring to said subscription information.

11. A system in accordance with any one of claims 6 to 10, wherein the list of the selected peer nodes is ordered as a function of the corresponding connection ratings.

12. A system in accordance with any one of claims 6 to 11, wherein the network infrastructure comprises multiple access networks (1, 12) operated by multiple access service providers and adapted to provide respective network access services to respective subscribers (21, 22, 23, 24, 26), the system comprising multiple peer-to-peer management apparatuses (30, 130) having access to respective data storages (50, 150) comprising subscription information of subscribers to the respective network access services and each adapted to cooperate with the supernode to generate connection ratings for the connections between the requesting peer node and peer nodes hosted by network devices subscribed to the respective network access service as a function of subscription information of the corresponding network devices.

13. A system in accordance with any one of claims 1 to 12, wherein the supernode is adapted to provide an extended list of peer nodes holding the given resource to the peer-to-peer management apparatus, and the peer-to-peer management apparatus is adapted to generate the selected subset by filtering the extended list and to return the selected subset to the supernode.

14. A system in accordance with any one of claims 1 to 14, wherein the peer-to-peer communications protocol is BitTorrent.
